(19) **Europäisches Patentamt**

**European Patent Office**

**Office européen des brevets**

(11) **EP 0 819 708 B2**

(12) # NEUE EUROPÄISCHE PATENTSCHRIFT

(45) Veröffentlichungstag und Bekanntmachung des Hinweises auf die Entscheidung über den Einspruch:
**16.06.2004 Patentblatt 2004/25**

(45) Hinweis auf die Patenterteilung:
**17.10.2001 Patentblatt 2001/42**

(21) Anmeldenummer: **97110936.8**

(22) Anmeldetag: **02.07.1997**

(51) Int Cl.$^7$: **C08F 212/06**, C08F 236/10, C08F 2/26

(54) **Stabile, wässrige Dispersionen von Copolymerisaten auf Basis von konjugierten, aliphatischen Dienen und vinylaromatischen Verbindungen**

Stable aqueous dispersions of copolymers of conjugated aliphatic dienes and vinylaromatic compounds

Dispersions aqueuses stables de copolymères de diènes aliphatiques conjugées et de composés vinylaromatiques

(84) Benannte Vertragsstaaten:
**AT BE DE ES FI FR GB IT NL**

(30) Priorität: **15.07.1996 DE 19628446**

(43) Veröffentlichungstag der Anmeldung:
**21.01.1998 Patentblatt 1998/04**

(73) Patentinhaber: **Polymer Latex GmbH & Co. KG**
**45764 Marl (DE)**

(72) Erfinder:
- **Ostrowicki, Andreas, Dr.**
  **50935 Köln (DE)**
- **Waldi, Joachim, Dr.**
  **Sarnia, Ontario N7S 5T3 (CA)**
- **Jones, Dennis-Wayne**
  **40764 Langenfeld (DE)**

(74) Vertreter:
**Sternagel, Fleischer, Godemeyer & Partner Patentanwälte**
**Braunsberger Feld 29**
**51429 Bergisch Gladbach (DE)**

(56) Entgegenhaltungen:
EP-A- 0 558 980     DE-A- 4 419 518
US-A- 3 329 640     US-A- 3 872 037

- **Welt der Farben, Februar 1996, C. Baumann et al., Seiten 15-21**
- **BASF AG, Technische Information TI/ED 1583d, Mai 1992, "Bodenbelägeund schäume, Styrofan LD 411"**

EP 0 819 708 B2

**Beschreibung**

Die vorliegende Erfindung betrifft stabile, wäßrige Dispersionen von Copolymerisaten auf Basis von Butadien Styrol und Acrylsäure sowie deren Verwendung als Bindemittel für den Papierstrich.

Wäßrige Dispersionen von Copolymerisaten auf Basis von konjugierten aliphatischen Dienen und vinylaromatischen Verbindungen sind bekannt (siehe z.B. DE-A 26 02 445, DE-A 26 02 444, US 3 575 913). Die Stabilisierung der wäßrigen Polymerdispersionen erfolgt üblicherweise mit bekannten Emulgatoren bzw. mit Schutzkolloiden, und sind dem Fachmann bekannt (Houben-Weyl, Methoden der org. Chemie, Bd. XIV/1, 1961, Stuttgart). Beispiele hierfür sind Polyglycolether, sulfonierte Paraffinkohlenwasserstoffe, höhere Alkylsulfate (wie z.B. Laurylsulfat), Alkalimetallsalze von Fettsäuren, wie Natriumstearat oder Natriumoleat, Salze von sulfonierten Alkylaromaten, wie z.B. Natriumdodecylbenzolsulfonat, Ethoxylierte $C_4$-$C_{12}$-Alkylphenole und deren Sulfonierungsprodukte sowie Ester der Sulfobernsteinsäure. Beispiele für Schutzkolloide sind Alkylhydroxyalkylcellulosen, teilweise oder vollständig hydrolysierte Polyvinylalkohole und -copolymere derselben, Acrylsäure, Homo- und Copolymere und teilweise neutralisierte Salze derselben, Acrylamid-Copolymere, Polyacrylat-Copolymere und Salze derselben, Carboxyalkylcellulose, wie z.B. Carboxymethylcellulose und deren Salze, sowie wassertösliche Stärkederivate.

Häufig erfolgt dabei die Stabilisierung der Polymerdispersionen mit den Emulgatoren in der Zusammenwirkung mit Carboxylgruppen, die in den Polymeren eingebaut wurden. Die Stabilität solcher Systeme gegenüber mehrwertigen Ionen, z.B. gegenüber Kalzium-Ionen, ist oft unbefriedigend, besonders bei erhöhten Temperaturen und unter Einwirkung von Scherkräften. Um diesen Nachteil zu überwinden, wurden nach dem Stand der Technik häufig Monomere bei der Polymerisation mitverwendet, die eine sogenannte "sterische Stabilisierung" durch den Einbau hydrophiler Gruppen bewirken. Als bekannte Monomere, die die Emulgierung und Stabilisierung der wäßrigen Dispersionen bewirken, sind zu nennen Acrylamid und/oder Methacrylamid (DE-A-2 160 381 und DE-A 2 213 756). Die hierbei erzielte Stabilisierung der Polymerdispersionen gegenüber mehrwertigen Ionen ist zwar gut, doch weisen die hierfür verwendeten Monomere zum Teil schwerwiegende Nachteile auf (erhöhte Toxizität, Erhöhung der Viskosität der Dispersionen mit einhergehenden Verarbeitungsproblemen, Toxizitätsprobleme in den fertigen Dispersionen durch Rückstände monomeren Acrylamids und/oder Methacrylamids). Ethoxylierte Alkylphenole, deren Schwefelsäurehalbester oder Sulfonierungsprodukte, die ebenfalls als Emulgatoren zu Erzielung hoher Stabilitäten gegen mehrwertige Ionen vorgeschlagen wurden (s. US-52 52 128), stehen unter dem Verdacht, Umweltbeeinträchtigungen zu verursachen. Mischungen von ionischen und nicht-ionischen Emulgatoren und Schutzkolloiden (siehe z.B. DE-A 42 06 429) erlauben zwar ebenfalls die Herstellung von Dispersionen mit hoher Elektrolytstabilität, sind jedoch als Mehrkomponentenmischung mit höherem Aufwand herzustellen. Darüber hinaus ist die Optimierung solcher Systeme kompliziert und daher wenig wirtschaftlich.

Aufgabe der vorliegenden Erfindung war es nun, wäßrige Polymerdispersionen zur Verfügung zu stellen, die die obengenannten Nachteile nicht aufweisen.

Gegenstand der vorliegenden Erfindung sind daher stabile, wäßrige Dispersionen von Copolymerisaten erhältlich durch Emulsionspolymerisation von

a) 20 bis 80 Gew.-Teilen Butadien

b) 20 bis 80 Gew.-Teilen Styrol

c) 0,1 bis 10 Gew.-Teilen Acrylsäure

d) 0 bis 20 Gew.-Teilen ethylenisch ungesättigter Carbonsäurenitrile sowie

e) 0 bis 20 Gew.-Teilen sich von Komponente b) unterscheidenden copolymerisierbarer Vinylverbindungen in Gegenwart von Wasser und 0,1 bis 5 Gew.-Teilen, Emulgatoren, bezogen auf 100 Gew.-Teile der Komponenten a) bis e), sowie in Gegenwart von wasserlöslichen Initatoren, wobei als Emulgatoren

f) Schwefelsäurehalbester ethoxylierter Fettsäurealkohole mit einem Ethoxylierungsgrad von 8 bis 9

eingesetzt werden, darüber hinaus mehr als 50 Gew.-% bis 85 Gew.-% der insgesamt eingesetzten Emulgatoren innerhalb der Zeit zugegeben werden, in der bis zu 40 % des Gesamtumsatzes der Einsatzkomponenten erreicht sind, und wobei während der Emulsionspolymerisation durch Zusatz von Basen 1 bis 50 % der der Komponente c) zugrundeliegenden Carbonsäuregruppen neutralisiert werden.

Die erfindungsgemäßen wäßrigen Dispersionen sind bevorzugt erhältlich durch Emulsionspolymerisation von 25 bis 65 Gew.-Teilen der Komponente a), 25 bis 65 Gew.-Teilen der Komponente b), 1 bis 6 Gew.-Teilen der Komponente c), 0 bis 15, insbesondere 0-10 Gew.-Teile der Komponente d) und 0 bis 15, insbesondere 0-10 Gew.-Teile der Komponente e).

Bevorzugt werden als ethylenisch ungesättigte Carbonsäurenitrile genannt Acrylnitril und/oder Methacrylnitril (Komponente d)) und als copolymerisierbare Vinylverbindungen (Komponente e)), Ester der Acryl- und/oder Methacrylsäure, in denen die Alkylgruppe 22 oder weniger Kohlenstoffatome enthält. Beispiele hierfür sind Methylacrylat, Methylmethacrylat, Ethyl(meth)acrylat, Isopropyl(meth)acrylat, Butyl(meth)-acrylat, 2-Ethylhexyl(meth)acrylat, Allylester gesättigter Monocarbonsäuren, Vinylester, Vinylether, Vinylketone, Dialkylester ungesättigter Dicarbonsäuren, Vinylacetat und/oder Vinylpyridin, Vinylchlorid, Vinylidenchlorid.

Die Emulgatoren werden erfindungsgemäß bevorzugt in Mengen von 0,2 bis 4,5 Gew.-Teilen, bezogen auf 100 Gew.-Teile der obengenannten Komponenten a) bis e), eingesetzt. Als Emulgatoren eignen sich erfindungsgemäß insbesondere Schwefelsäurehalbester ethoxylierter Fettalkohole, die aus einem geradkettigen oder verzweigten Alkylrest mit 8 bis 18 Kohlenstoffatomen bestehen, der über eine Ethergruppe mit einer Poly- oder Oligoethylenoxidsequenz verknüpft ist und deren Endgruppen aus einem Sulfatrest bestehen. Als Poly- oder Oligoethylensequenzen kommen dabei Ethylenoxidoligomere in Frage mit einem Polymerisationsgrad von 8 bis 9 Ethylenoxideinheiten.

Besonders bevorzugt werden als Fettalkoholethersulfate solche genannt, die als Fettalkohol einen $C_8$-$C_{18}$-Alkylrest enthalten, z.B. Capryl-, Caprin-, Lauryl-, Myristyl-, Stearyl-, Olein- oder Elaidinalkohol. Besonders bevorzugt sind Lauryloligoethylenoxysulfat, Palmityl-oligoethylenoxysulfat, Stearyloligoethylenoxysulfat und Oleyloligoethylenoxysulfat, wobei die Oligoethylenoxy-Sequenz besonders bevorzugt aus 8 bis 9 Ethylenoxideinheiten besteht.

Als Fettalkohol kann dabei sowohl die reine Ausgangsverbindung oder aber auch die häufig bei den synthetischen Fettalkoholen anfallenden Gemische homologer und isomerer Alkylreste, z.B. ein Gemisch aus $C_{12}$- und $C_{13}$-Fettalkoholen eingesetzt werden. Typischerweise drückt der Ethoxylierungsgrad nur den Mittelwert einer Verteilung aus. Beides ist jedoch nur von untergeordnetem Einfluß auf die angestrebten Eigenschaften der erfindungsgemäßen Dispersionen.

Die freie Säuregruppe des Sulfatrestes liegt üblicherweise neutralisiert als Ammonium- oder Alkalimetallsalz vor, die Neutralisation kann aber auch während der Polymerisation durch die eingesetzte Base erfolgen.

Wie zuvor erwähnt, ist es bei der Emulsionspolymerisation üblich, Initiatoren der Polymerisationsreaktion zuzugeben. Erfindungsgemäß werden wasserlösliche Initiatoren verwendet, die für Emulsionspolymerisationen bekannt und gängig sind.

Genannt werden insbesondere organische und/oder anorganische Peroxide, wie z.B. Alkalimetallperoxodisulfate und/oder Azoverbindungen oder kombinierte Systeme, die aus wenigstens einem-organischen Reduktionsmittel und wenigstens einem Peroxid und/oder Hydroperoxid zusammengesetzt sind, wie z.B. tert.-Butylhydroperoxid und das Natriumsalz der Hydroxymethansulfinsäure oder Wasserstoffperoxid und Ascorbinsäure, oder kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, wobei anstelle von Ascorbinsäure auch häufig das Natriummetallsalz der Hydroxymethansulfinsäure, Natriumsulfit, Natriumhydrogensulfit und/oder Natriummetalldisulfit und anstelle von Wasserstoffperoxid tert.-Butylhydroperoxid oder Alkalimetallperoxidsulfate und/ oder Ammoniumperoxiddisulfate eingesetzt werden. Anstelle eines wasserlöslichen Eisen(II)-salzes wird häufig eine Kombination aus wasserlöslichen Fe/V-Salzen benutzt.

Das Initiatorsystem kann nach Maßgabe seines Verbrauchs im Verlauf der radikalischen wäßrigen Emulsionspolymerisation kontinuierlich oder stufenweise zugesetzt werden. Im einzelnen hängt dies in an sich bekannter Weise sowohl von der chemischen Natur des Initiatorsystems als auch von der Polymerisationstemperatur ab. Ganz besonders bevorzugt sind Peroxide, z.B. Alkalimetallperoxodisulfate, wie Natrium- oder Ammoniumperoxodisulfat.

Die günstigste Menge an wasserlöslichen Initiatoren kann leicht durch entsprechende Vorversuche ermittelt werden. Üblicherweise werden die wasserlöslichen Initiatoren in einer Menge von 0,1 bis 2,0 Gew.-%, bezogen auf die Gesamtmasse der zu polymerisierenden Monomeren, zugegeben.

Darüber hinaus können für die erfindungsgemäße Emulsionspolymerisation noch die bekannten Molekulargewichtsregler, wie Mercaptoverbindungen, wie z.B. tertiäres Dodecylmercaptan oder dimeres $\alpha$-Methylstyrol, zugeben werden. Zusätzlich können noch weitere Hilfsmittel, wie Komplexierungsmittel, z.B. für störende Metallionen, Inhibitoren, z.B. Hydrochinonmonomethylether, der Emulsionspolymerisation zugegeben werden. Die Molekulargewichtsregler und die Hilfsmittel sind bekannt und beispielsweise beschrieben in Houben-Weyl, Methoden der organischen Chemie, Bd. XIV/1, S. 297 ff., 1961, Stuttgart.

Bei der Herstellung der erfindungsgemäßen wäßrigen Dispersionen ist es wesentlich, daß mehr als 50 Gew.-%. der insgesamt eingesetzten Emulgatoren innerhalb der Zeit dem Reaktionsgemisch zugegeben werden, in der bis zu 40 %, bevorzugt 35 %, des Gesamtumsatzes der Einsatzkomponenten erreicht ist. Die Umsatzrate der Einsatzkomponente kann leicht durch eine Bestimmung des Feststoffgehaltes der Dispersion mittels einer Eindampfprobe bestimmt werden.

In einer besonderen Ausgestaltung der erfindungsgemäßen Emulsionspolymerisation zur Herstellung der wäßrigen Dispersion von Copolymerisaten kann es von Vorteil sein, bis zu 15 Gew.-% der insgesamt eingesetzten Menge an Emulgatoren gleich zu Beginn der Polymerisation dem Reaktionsgemisch zuzugeben und die restliche Menge, d.h. mehr als 35 Gew.-% [bis zu 85 Gew.-%] der insgesamt eingesetzten Emulgatoren dann innerhalb der Zeit zuzugeben, in der bis zu 40 % des Gesamtumsatzes der Einsatzkomponenten erreicht ist.

Die Dosierrate der Emulgatoren während der Emulsionspolymerisation ist auch abhängig von der angestrebten Teilchengröße der Endpolymere und von der Reaktionsgeschwindigkeit und kann leicht durch einige Vorversuche ermittelt werden. Das Optimum wird dabei durch eine minimale Menge an Ausscheidungen (Koagulat) während der Polymerisation, das Erzielen der gewünschten Endteilchengröße und -verteilung und das Maximum der Stabilität der resultierenden Polymerdispersion gegenüber mehrwertigen Ionen bestimmt.

Die restliche Menge an Emulgatoren, d.h. weniger als 50 Gew.-% der insgesamt eingesetzten Emulgatoren, kann während der verbleibenden Zeit der Polymerisation dem Reaktionsgemisch zudosiert werden oder nach Beendigung der Polymerisation der Dispersion zugesetzt werden.

Weiterhin entscheidend für die angestrebten Eigenschaften der wäßrigen-Dispersion von Copolymerisaten ist die 1-50 % ige Neutralisation der in der Polymerisation eingesetzten Acrylsäure (Komponente c)). Bevorzugt werden 5 bis 45 % der der Komponente c) zugrundeliegenden Acrylsäure mit Basen neutralisiert.

Als Basen eignen sich insbesondere wässrige Lösungen von Alkalimetalloxiden oder -hydroxiden, ganz besonders bevorzugt Ammoniumhydroxid-, Natriumhydroxid- oder Kaliumhydroxidlösungen.

Polymerisationsdruck und Polymerisationstemperatur sind dagegen von eher untergeordneter Bedeutung. Im allgemeinen arbeitet man bei Temperaturen von Raumtemperatur 20°C und 100°C, vorzugsweise bei Temperaturen von 60 bis 95°C.

Nach Beendigung des eigentlichen Polymerisationsverfahrens wird vorzugsweise noch einige Stunden unter Aufrechterhaltung der Polymerisationstemperatur nachgerührt. Daran können sich übliche Maßnahmen zur Restmonomerentfernung, zur Einstellung des pH-Wertes oder sonstige Methoden zur Endeinstellung bestimmter Eigenschaften anschließen.

Nach einer besonderen vorteilhaften Variante werden die erfindungsgemäßen wäßrigen Dispersionen wie folgt hergestellt.

In ein Polymerisationsgefäß werden destilliertes Wasser von ca. 85°C, Chelatisierungsmittel (z.B. Trilon B der Firma BASF, Ludwigshafen), eine Teilmenge Emulgator und Initiator und Polymer-Saatlatex (mit einer mittleren Partikelgröße von ca. 35 nm, z.B. auf Styrol-Acrylat-Basis) vorgelegt und unter Rühren auf etwa 85°C erhitzt. Das Polymerisationsgefäß wird mit Stickstoff gespült und die Zuläufe der Monomere, Emulgatoren, Basen, Initiatoren, Molekulargewichtsregler gestartet und über die Dauer der Polymerisation aufrecht erhalten. Anschließend wird die Reaktionstemperatur über ca. 1 bis 4 Stunden aufrecht erhalten. Der Latex hat zu diesem Zeitpunkt eine Feststoffkonzentration von ungefähr 50 %. Der pH-Wert wird mit Ammoniakwasser auf 7,0 eingestellt.

Die erfindungsgemäßen wäßrigen Dispersionen von Copolymerisaten auf Basis von Butadien und Styrol besitzen bevorzugt einen Feststoffanteil (Polymeranteil) von 40 bis 65 %, insbesondere 45 bis 60 %.

Die Vorteile der erfindungsgemäßen wäßrigen Dispersionen liegen in der besonderen Stabilität gegenüber mehrwertigen Metallionen. Darüber hinaus sind die eingesetzten Emulgatoren biologisch gut abbaubar, die Viskositäten sind niedrig und führen deshalb zu Vorteilen bei der Herstellung und Handhabung der Dispersionen. Die mit dem erfindungsgemäßen Verfahren erhaltenen Polymerisate haben eine gute Beständigkeit gegen Vergilbung.

**Beispiele**

Allgemeine Herstellvorschrift

Alle in den Polymerisationsrezepturen angegebenen Mengenanteile wurden in Gewichtsteilen, bezogen auf insgesamt 100 Teile eingesetzte Monomere, gemacht.

In einem Polymerisationsgefäß wurde eine in den Tabellen 1 bis 10 unter dem Punkt "Vorlage" aufgelistete Mischung hergestellt. Dabei wurde das Wasser und der Basislatex mit einer Temperatur von 85°C eingesetzt. Mit dem Saatlatex, z.B. auf der Grundlage Styrol-Acrylsäure wurde eine Partikelgröße von 35 nm vorgegeben. Mit einem Teil des Vorlagenwassers wurde eine Lösung des Initiators APS (Ammoniumpersulfat) bereitet und als letzte Komponente zur Mischung hinzugegeben.

Anschließend wurde die Innentemperatur des Reaktionsgefäßes auf 85°C eingestellt, der Rührer gestartet und die in den Tabelle aufgelisteten Zuläufe zum angeführten Zeitpunkt gestartet und die vorgegebenen Komponenten in der angegebenen Zeitdauer eindosiert.

Nach Beendigung der Zuläufe derVersuche in den Beispielen 2 bis 10 wurde noch 1 Stunde bei 85°C gerührt. Anschließend wurden durch Einleitung von Wasserdampf und Anlegen von Vakuum restliche Anteile der eingesetzten Monomere entfernt.

Nach Abkühlen der entstandenen Polymerdispersion auf Raumtemperatur wurde der pH-Wert mit Ammoniakwasser auf pH 7,0 und durch Zugabe von Wasser ein Feststoffgehalt von 50 % eingestellt.

Die folgenden Prüfungen wurden durchgeführt und in den Beispieltabellen aufgeführt:

1) Brookfield-Viskosität [mPas], n. ISO 1652

2) Koagulatgehalt in %, bezogen auf den Polymeranteil, Trockenbedingungen entsprechend DIN 53563

3) Oberflächenspannung (OFS) [mN/m]

4) spezifische Trübung [1/gcm]

5) Visuelle Beurteilung der Betagbildung im Polymerisationsgefäß

6) Beurteilung der Scherstabilität des Latex ("Scherstab."), s. Methodenbeschreibung

7) Beurteilung der Stabilität des Latex gegen Calcium-Ionen ("Ca-Test"), s. Methodenbeschreibung

Methodenbeschreibung Scherstabilität

40 g Latex mit einer exakten Feststoffkonzentration von 48 % und einem pH von 7,0 werden unter Rühren langsam mit 2 g einer 20%igen Calciumchloridlösung versetzt.

Nach 5 minütigem Rühren bei Raumtemperatur wird durch ein $50\,\mu$ Filter filtriert.

Das Filtrat wird in die Meßkammer eines Rotationsviskosimeters (z.B. Haake Rotovisko RV 20 mit Meßkopf 1500 und programmierbarer Temperatursteuerung) gegeben.

Anschließend wird ein Schergefälle entsprechend 10.000 s$^{-1}$ angelegt und die Temperatur mit einer Rate von 1°C/min von Raumtemperatur auf 70°C angehoben.

Als Meßergebnis wird die Temperatur, bei der die Koagulation der Mischung erfolgte in °C notiert.

Methodenbeschreibung Calcium-Stabilität

Eine Latexprobe von pH 7,0 wird mit destilliertem Wasser auf einen Feststoffgehalt von 0,05 % eingestellt. Es wird mit 0,5 molarer Calciumchloridlösung versetzt und die Mischung anschließend 4 h auf einer Schüttelmaschine bewegt. Danach wird mittels eines Photometers bei einer Wellenlänge von 700 mm und einer Küvettendicke von 10 mm die spezifische Trübung der Probe bestimmt.

Durch mehrere Bestimmungen unter Zugabe unterschiedlicher Mengen der Calciumchloridlösung wird die Menge an Calciumionen bestimmt, die eine Agglomeration der Dispersion bewirkt, erkennbar am Anstieg der spezifischen Trübung gegenüber einer Nullprobe.

Die Stabilität gegen Calcium-Ionen wird ausgedrückt in mmol $CaCl_2$/l.

Vergleichsbeispiel 1 zeigt eine Rezeptur zur Herstellung einer Copolymerdispersion unter Verwendung von Acrylamid, aber ohne die beanspruchten Emulgatoren, die eine hohe Stabilität gegen mehrwertige Ionen (Scherstab. und CaTest) aufweist.

Vergleichsbeispiel 2 zeigt eine Rezeptur zur Herstellung eines SBR-Copolymerisates ohne die Verwendung von Acrylamid und die erfindungsgemäßen Emulgatoren. Das erhaltene Endpolymerisat weist nur eine geringe Stabilität gegenüber Calcium-Ionen auf

Vergleichsbeispiel 1 und 2 beschreiben den Stand der Technik und sind nicht Teil der Erfindung.

In den Beispielen 3 und 4 wird der Einfluß der Neutralisation der eingesetzten ethylenisch ungesättigten Carbonsäuren (C) unter Verwendung eines Fettalkoholethersulfats mit einem Ethoxylierungsgrad von 2 (Vergleichsbeispiel) bzw. mit einem Ethoxylierungsgrad von 4 bis 5 (Vergleichsbeispiel 4) illustriert. Die Neutralisation wird ausgedrückt durch den Neutralisationsgrad [%]

$$NG = \frac{[\varepsilon_{Säure}]}{[\varepsilon_{Base}]} \times 100$$

mit

$[\varepsilon_{Säure}]$ = Äquivalente der eingesetzten ethylenisch ungesättigten Carbonsäuren (c) und

$[\varepsilon_{Base}]$ = Äquivalente der eingesetzten Base.

Die Stabilitäten der erhaltenen Dispersionen gegenüber Calcium-Ionen sind unter Verwendung beider Emulgatorsysteme bei 0 % Neutralisationsgrad unbefriedigend und erreichen nicht das Niveau der Dispersion nach Beispiel 1.

Überraschenderweise steigt die Stabilität gegenüber Calcium-Ionen oberhalb eines Neutralisationsgrades von 7,5 % drastisch an, um dann oberhalb von 25 % wieder deutlich abzufallen.

Die optimalen Stabilitäten werden dabei mit einem Neutralisationsgrad von 10 bis 25 % im Vergleichsbeispiel 3 und mit 10 bis 15 % im Vergleichsbeispiel 4 erhalten und damit werden die hohen Stabilitäten der Dispersionen nach Vergleichsbeispiel 1 erreicht bzw. übertroffen.

Im Versuchnummer 13 (Vergleichsbeispiel) des Beispiels 5 wird die Ausführung der Dosierung der Emulgatoren (15 bis 85 % in der Zeit, in der bis zu 40 % des Gesamtumsatzes gebildet werden), illustriert.

Bei allen Versuchnummer des Beispiel 5 wurde ein Fettalkoholethersulfat mit einem Ethoxylierungsgrad von 8 bis 9 bei einem Neutralisationsgrad von 15 % eingesetzt.

Alle Dispersionen des Beispiels 5 weisen gegenüber dem Vergleichsbeispiel 2 eine Verbesserung der Stabilität gegenüber Calcium-Ionen auf. Überraschenderweise erreichen aber nur in den Versuchen Nr. 14 bis 16, in denen mehr als 50 % der insgesamt während der Polymerisation eingesetzten Emulgatoren während der Bildung von bis zu 40 % des Gesamtumsatzes der Einsatzkomponenten eindosiert werden, das angestrebte Stabilitätsniveau des Vergleichsbeispiel 1.

Das Optimum der $Ca^{2+}$-Ionen-Stabilität wird dabei erreicht, wenn ca. 65 % der insgesamt eingesetzten Emulgatoren während der Bildung von bis zu 40 % des Endumsatzes in den Reaktionsansatz eindosiert werden.

In den Vergleichsbeispielen 6 und 7 wird der Einfluß des Ethoxylierungsgrades des Fettalkoholethersulfats auf die Stabilität der Dispersion beschrieben.

Am Beispiel 6 zeigt sich, daß mit steigendem Ethoxylierungsgrad des Emulgators die Stabilität der Dispersion gegenüber $Ca^{2+}$-Ionen ansteigt. Exp. 17 ohne Ethoxygruppen zeigt eine unbefriedigende Stabilität, in den Exp. 18 und 19 werden mit Ethoxylierungsgraden von 3 bis 5 Stabilitäten gegen Calcium-Ionen erreicht, die dem angestrebten Niveau des Vergleichsbeispiel 1 entsprechen. Exp. 17 ist hierbei nur ein Kontrollversuch und nicht Teil der Ansprüche. Im Vergleichsversuch 20 wird unter Verwendung eines 50 EO-Einheiten enthaltenden Emulgators zwar eine deutlich die des Vergleichsbeispiels 1 übertreffende Stabilität gefunden, jedoch ist dieser Emulgatortyp wegen der hohen Koagulatmengen und der Abweichung der Teifchengröße, ausgedrückt durch die spez. Trübung, nicht für den beschriebenen Einsatzzweck geeignet.

Analog wird im Vergleichsbeispiel das Optimum der angestrebten Eigenschaften mit 9 EO-Einheiten gefunden, wobei wiederum mit den höheren Ethoxylierungsgraden des Exp. 23 erhöhte Ausscheidungen und ansteigende Teilchengrößen gefunden werden.

Die Vergleichsbeispiele 8 und 9 illustrieren für zwei Emulgatoren unterschiedlichen Ethoxylierungsgrades den Effekt unterschiedlicher Emulgatormengen auf die Stabilitäten der fertigen Dispersionen.

Die Vergleichsversuche 24 bis 31 belegen zwar, daß erwartungsgemäß die Stabilität der Dispersionen gegen $Ca^{2+}$-Ionen mit steigender Emulgatormenge ansteigt.

Überraschenderweise bewirken die optimierten Verfahrensbedingungen der vorherigen Beispiele jedoch eine Verbesserung der angestrebten Eigenschaften, die deutlich über die einer einfachen Steigerung der Einsatzmenge der Emulgatoren hinausgeht.

Vergleichsbeispiel 10 beschreibt den Einsatz eines weiteren Emulgatortyps.

Die erzielten Stabilitäten gegen mehrwertige Ionen erreichen das Niveau des angestrebten Vergleichsbeispiel 1, bleiben aber etwa hinter den bevorzugten Alkylethersulfaten zurück.

### Übersicht über die verwendeten Emulgatoren

| Emulgator-Nr. | Typ |
|---|---|
| 1 | Natriumdodecylbenzolsulfonat |
| 2 | Natriumdodecylsulfat |
| | Schwefelsäurehalbester von ethoxylierten $C_{12}$-$C_{14}$-Fettalkoholen, Na-Salze: Ethoxylierungsgrad: |
| 3 | 2 |
| 4 | 3 |
| 5 | 4-5 |
| 6 | 8-9 |

(fortgesetzt)

| Emulgator-Nr. | Typ |
|---|---|
| 7 | 16 |
| 8 | ca. 50 |
| 9 | Halbester eines Tetra-ethylenoxylauryl-alkohols mit Sultobernsteinsäure, Natrium-Salz |
| Abkürzungen:<br>APS Ammoniumpersulfat<br>DDM Dodecylmercaptan<br>OFS Oberflächenspannung<br>NG Neutralisationsgrad | |

**Vergleichsbeispiel 1**

| | | Versuch-Nr. | 1 | Start (h) | Dauer (h) |
|---|---|---|---|---|---|
| Vorlage | Basislatex | | 1,14 | | |
| | Wasser | | 32,4 | | |
| | Trilon B | | 0,01 | | |
| | Emulgator 1 | | 0,1 | | |
| | APS | | 0,1 | | |
| Zuläufe | 1) | Styrol | 59,85 | 0 | 7 |
| | | Butadien | 33,0 | | |
| | | Acrylsäure | 4,0 | | |
| | 2) | Acrylamid | 2,0 | | |
| | | Wasser | 21,1 | 1 H 15' | 6,5 |
| | 3) | Wasser | 35,2 | | |
| | | NaOH | 0 | | |
| | | APS | 1,0 | 0 | 8 |
| | 4) | DDM | 1,3 | 0 | 7 |
| | 5) | Emulgator 1 | 0,2 | | |
| | | Wasser | 11,3 | 15 min | 1 |

Nach Ende von Zulauf 3 wird unter Rühren während 5 h eine Lösung von 0,3 Tl. Ammoniumpersulfat in 6 Tl. Wasser zudosiert.

| Eigenschaften | | 1 | |
|---|---|---|---|
| | Viskosität | 190 | [mPas] |
| | Koagulat | 0,14 | [%] |
| | OFS | 47 | [mN/m] |
| | Kesselbelegung | frei | |
| | Ca-Test | >30 | [mmol/l] |
| | Scherstab. | 60 | [°C] |
| | spez. Trübung | 0,83 | [l/gcm] |

**Vergleichsbeispiel 2**

| | Versuch-Nr. | | 2 | Start (h) | Dauer (h) |
|---|---|---|---|---|---|
| Vorlage | Basislatex | | 1,2 | | |
| | Wasser | | 40 | | |
| | Trilon B | | 0,01 | | |
| | Emulgator 1 | | 0,1 | | |
| | APS | | 0,1 | | |
| Zuläufe | 1) | Styrol | 61,8 | 0 | 7 |
| | | Butadien | 33,0 | | |
| | | Acrylsäure | 4,0 | | |
| | 2) | Emulgator 1 | 0,4 | 0 | 8,5 |
| | | Wasser | 48,6 | | |
| | | NaOH | 0,33 | | |
| | | APS | 1,2 | | |
| | 3) | DDM | 1,1 | 0 | 7 |
| | 4) | Emulgator 1 | 0,2 | 15 min | 1 |
| | | Wasser | 11,4 | | |

| Eigenschaften | | 2 |
|---|---|---|
| | Viskosität | 78 |
| | Koagulat | 0,11 |
| | Kesselbelegung | frei |
| | OFS | 45 |
| | Ca-Test | 2 |
| | Scherstab. | koag. |
| | spez. Trübung | 0,85 |

**Vergleichsbeispiel 3**

| | | Versuch-Nr. | 3 | 4 | 5 | 6 | 7 | Start | Dauer |
|---|---|---|---|---|---|---|---|---|---|
| Vorlage | | Basislatex | 1,15 | 1,15 | 1,15 | 1,15 | 1,15 | | |
| | | Wasser | 35 | 35 | 35 | 35 | 35 | | |
| | | Trilon B | 0,01 | 0,01 | 0,01 | 0,01 | 0,01 | | |
| | | Emulgator 3 | 0,05 | 0,05 | 0,05 | 0,05 | 0,05 | | |
| | | APS | 0,1 | 0,1 | 0,1 | 0,1 | 0,1 | | |
| Zuläufe | 1) | Styrol | 61,85 | 61,85 | 61,85 | 61,85 | 61,85 | | |
| | | Butadien | 33 | 33 | 33 | 33 | 33 | | |
| | | Acrylsäure | 4,0 | 4,0 | 4,0 | 4,0 | 4,0 | 0 | 9 |
| | 2) | Emulgator 3 | 0,6 | 0,6 | 0,6 | 0,6 | 0,6 | | |
| | | Wasser | 48,6 | 48,6 | 48,6 | 48,6 | 48,6 | 1h15' | 7,75 |
| | 3) | NaOH | 0 | 0,167 | 0,22 | 0,56 | 0,9 | | |
| | | Neutral.grad | 0 % | 7,5 % | 10 % | 25 % | 41 % | | |
| | | APS | 1,2 | 1,2 | 1,2 | 1,2 | 1,2 | | |
| | | Wasser | 7,1 | 7,1 | 7,1 | 7,1 | 7,1 | 0 | 9 |
| | 4) | DDM | 1,3 | 1,3 | 1,3 | 1,3 | 1,3 | 0 | 9 |
| | 5) | Emulgator 3 | 0,3 | 0,3 | 0,3 | 0,3 | 0,3 | | |
| | | Wasser | 9,3 | 9,3 | 9,3 | 9,3 | 9,3 | 15min | 1 |

| Eigenschaften | Versuch-Nr. | 3 | 4 | 5 | 6 | 7 |
|---|---|---|---|---|---|---|
| | Ca-Test | 15 | 24 | 28 | 20 | 14 |
| | Kessel-belegung | frei | frei | frei | frei | frei |
| | Koagulat | 0,1 | 0,11 | 0,12 | 0,13 | 0,19 |
| | spez.Trübung | 0,851 | 0,869 | 0,810 | 0,820 | 0,860 |
| | Scherstab. | koag.* | 47 | 50 | 62 | 52 |
| | Viskosität | 115 | 110 | 105 | 128 | 131 |
| | OFS | 41 | 41 | 40 | 41 | 43 |

* Totalkoagulation bereits bei der Herstellung der Versuchsmischung

**Vergleichsbeispiel 4**

| | | Versuch-Nr. | 8 | 9 | 10 | 11 | 12 | Start | Dauer |
|---|---|---|---|---|---|---|---|---|---|
| <u>Vorlage</u> | | Basislatex | 1,15 | 1,15 | 1,15 | 1,15 | 1,15 | | |
| | | Wasser | 35 | 35 | 35 | 35 | 35 | | |
| | | Trilon B | 0,01 | 0,01 | 0,01 | 0,01 | 0,01 | | |
| | | Emulgator 5 | 0,05 | 0,05 | 0,05 | 0,05 | 0,05 | | |
| | | APS | 0,1 | 0,1 | 0,1 | 0,1 | 0,1 | | |
| <u>Zuläufe</u> | 1) | Styrol | 61,85 | 61,85 | 61,85 | 61,85 | 61,85 | | |
| | | Butadien | 33 | 33 | 33 | 33 | 33 | | |
| | | Acrylsäure | 4,0 | 4,0 | 4,0 | 4,0 | 4,0 | 0 | 9 |
| | 2) | Emulgator 5 | 0,6 | 0,6 | 0,6 | 0,6 | 0,6 | | |
| | | Wasser | 48,6 | 48,6 | 48,6 | 48,6 | 48,6 | 1h15' | 7,75 |
| | 3) | NaOH | 0 | 0,167 | 0,22 | 0,34 | 0,56 | | |
| | | Neutral.grad | 0% | 7,5% | 10% | 15 % | 25% | | |
| | | APS | 1,2 | 1,2 | 1,2 | 1,2 | 1,2 | | |
| | | Wasser | 7,1 | 7,1 | 7,1 | 7,1 | 7,1 | 0 | 9 |
| | 4) | DDM | 1,3 | 1,3 | 1,3 | 1,3 | 1,3 | 0 | 9 |
| | 5) | Emulgator 5 | 0,3 | 0,3 | 0,3 | 0,3 | 0,3 | | |
| | | Wasser | 9,3 | 9,3 | 9,3 | 9,3 | 9,3 | 15min | 1 |

| <u>Eigenschaften</u> | Versuch-Hr. | 8 | 9 | 10 | 11 | 12 |
|---|---|---|---|---|---|---|
| | Ca-Test | 5 | 33 | 40 | 28 | 28 |
| | Kesselbelegung | frei | frei | frei | frei | frei |
| | Koagulat | 0,38 | 0,15 | 0,08 | 0,12 | 0,41 |
| | spez.Trübung | 0,977 | 0,882 | 0,814 | 0,850 | 0,988 |
| | Scherstab. | koag. | 52 | 60 | 66 | 63 |
| | Viskosität | 80 | 120 | 98 | 108 | 120 |
| | OFS | 42 | 41 | 43 | 40 | 43 |

**Beispiel 5**

| | | Versuch-Nr. | 13 (Vergleich) | 14 | 15 | 16 | Start | Dauer |
|---|---|---|---|---|---|---|---|---|
| <u>Vorlage</u> | | Basislatex | 1,2 | 1,2 | 1,2 | 1,2 | | |
| | | Wasser | 33 | 33 | 33 | 33 | | |
| | | Trilon B | 0,01 | 0,01 | 0,01 | 0,01 | | |
| | | Emulgator 6 | 0,05 | 0,05 | 0,05 | 0,05 | | |
| | | APS | 0,1 | 0,1 | 0,1 | 0,1 | | |
| <u>Zuläufe</u> | 1) | Styrol | 61,8 | 61,8 | 61,8 | 61,8 | | |
| | | Butadien | 33 | 33 | 33 | 33 | | |
| | | Acrylsäure | 4,0 | 4,0 | 4,0 | 4,0 | 0 | 7 |

(fortgesetzt)

| | | Versuch-Nr. | 13 (Vergleich) | 14 | 15 | 16 | Start | Dauer |
|---|---|---|---|---|---|---|---|---|
| | 2) | Emulgator 6 | 0,6 | 0,5 | 0,4 | 0,25 | | |
| | | Wasser | 48,6 | 48,6 | 48,6 | 48,6 | 1h15' | 6,75 |
| | 3) | NaOH | 0,33 | 0,33 | 0,33 | 0,33 | | |
| | | NG (%) | 15% | 15% | 15% | 15 % | | |
| | | APS | 1,2 | 1,2 | 1,2 | 1,2 | | |
| | | Wasser | 7,1 | 7,1 | 7,1 | 7,1 | 0 | 8 |
| | 4) | DDM | 1,1 | 1,1 | 1,1 | 1,1 | 0 | 7 |
| | 5) | Emulgator 6 | 0,1 | 0,2 | 0,3 | 0,45 | | |
| | | Wasser | 11,3 | 11,3 | 11,3 | 11,3 | 15min | 1 |

| Eigenschaften | Versuch-Nr. | 13 | 14 | 15 | 16 |
|---|---|---|---|---|---|
| | Ca-Test | 15 | 25 | 38 | 28 |
| | Kesselbelegung | frei | frei | frei | frei |
| | Koagulat | 0,22 | 0,11 | 0,12 | 0,12 |
| | spez.Trübung | 0,845 | 0,827 | 0,832 | 0,85 |
| | Scherstab. | 45 | 53 | 57 | 52 |
| | Viskosität | 78 | 103 | 110 | 85 |
| | OFS | 44 | 43,6 | 44,6 | 45 |

**Vergleichsbeispiel 6**

| | | Versuch-Nr. | 17 | 18 | 19 | 20 | Start | Dauer |
|---|---|---|---|---|---|---|---|---|
| | | Emulgatortyp | 2 | 3 | 5 | 8 | | |
| | | EO-Einheiten | 0 | 2 | 4 | 50 | | |
| Vorlage | | Basislatex | 1,15 | 1,15 | 1,15 | 1,15 | | |
| | | Wasser | 35 | 35 | 35 | 35 | | |
| | | Trilon B | 0,01 | 0,01 | 0,01 | 0,01 | | |
| | | Emulgator | 0,05 | 0,05 | 0,05 | 0,05 | | |
| | | APS | 0,1 | 0,1 | 0,1 | 0,1 | | |
| Zuläufe | 1) | Styrol | 61,85 | 61,85 | 61,85 | 61,85 | | |
| | | Butadien | 33 | 33 | 33 | 33 | | |
| | | Acrylsäure | 4,0 | 4,0 | 4,0 | 4,0 | 0 | 9 |
| | 2) | Emulgator | 0,6 | 0,6 | 0,6 | 0,6 | | |
| | | Wasser | 48,6 | 48,6 | 48,6 | 48,6 | 1h15' | 7,75 |

(fortgesetzt)

| | | Versuch-Nr. | 17 | 18 | 19 | 20 | Start | Dauer |
|---|---|---|---|---|---|---|---|---|
| | 3) | NaOH | 0,225 | 0,225 | 0,225 | 0,225 | | |
| | | NG (%) | 10% | 10% | 10% | 10% | | |
| | | APS | 1,2 | 1,2 | 1,2 | 1,2 | | |
| | | Wasser | 7,1 | 7,1 | 7,1 | 7,1 | 0 | 9 |
| | 4) | DDM | 1,3 | 1,3 | 1,3 | 1,3 | 0 | 9 |
| | 5) | Emulgator | 0,3 | 0,3 | 0,3 | 0,3 | | |
| | | Wasser | 9,3 | 9,3 | 9,3 | 9,3 | 15min | 1 |

| Eigenschaften | Versuch-Nr. | 17 | 18 | 19 | 20 |
|---|---|---|---|---|---|
| | Ca-Test | 4 | 28 | 40 | 45 |
| | Kesselbelegung | frei | frei | frei | belegt |
| | Koagulat | 0,08 | 0,12 | 0,08 | 3,0 |
| | spez.Trübung | 0,835 | 0,810 | 0,814 | 0,967 |
| | Scherstab. | koag.* | 50 | 60 | 60 |
| | Viskosität | 138 | 105 | 98 | 108 |
| | OFS | 39 | 40 | 43 | 43 |

*Totalkoagulation bereits bei der Herstellung der Versuchsmischung

## Vergleichsbeispiel 7

| | | Versuch-Nr. | 21 | 22 | 23 | Start | Dauer |
|---|---|---|---|---|---|---|---|
| | | Emulgatortyp | 4 | 6 | 7 | | |
| | | EO-Einheiten | 3 | 9 | 16 | | |
| Vorlage | | Basislatex | 1,2 | 1,2 | 1,2 | | |
| | | Wasser | 33 | 33 | 33 | | |
| | | Trilon B | 0,01 | 0,01 | 0,01 | | |
| | | Emulgator. | 0,05 | 0,05 | 0,05 | | |
| | | APS | 0,1 | 0,1 | 0,1 | | |
| Zuläufe | 1) | Styrol | 61,8 | 61,8 | 61,8 | | |
| | | Butadien | 33 | 33 | 33 | | |
| | | Acrylsäure | 4,0 | 4,0 | 4,0 | 0 | 7 |
| | 2) | Emulgator | 0,4 | 0,4 | 0,4 | | |
| | | Wasser | 48,6 | 48,6 | 48,6 | 1 h15' | 6,75 |
| | 3) | NaOH | 0,33 | 0,33 | 0,33 | | |
| | | NG (%) | 15 % | 15 % | 15 % | | |
| | | APS | 1,2 | 1,2 | 1,2 | | |
| | | Wasser | 7,1 | 7,1 | 7,1 | 0 | 8 |

(fortgesetzt)

|  | Versuch-Nr. |  | 21 | 22 | 23 | Start | Dauer |
|---|---|---|---|---|---|---|---|
|  | 4) | DDM | 1,1 | 1,1 | 1,1 | 0 | 7 |
|  | 5) | Emulgator | 0,3 | 0,3 | 0,3 |  |  |
|  |  | Wasser | 11,3 | 11,3 | 11,3 | 15min | 1 |

| Eigenschaften | Versuch-Nr. | 21 | 22 | 23 |
|---|---|---|---|---|
|  | Ca-Test | - | - | - |
|  | Kesselbelegung | frei | frei | etw.belegt |
|  | Koagulat | 0,1 | 0,12 | 1,2 |
|  | spez.Trübung | 0,841 | 0,832 | 0,941 |
|  | Scherstab. | 47 | 57 | 60 |
|  | Viskosität | 105 | 110 | 98 |
|  | OFS | 45 | 44,6 | 46 |

**Vergleichsbeispiel 8**

|  |  | Versuch-Nr. |  | 24 | 25 | 26 | 27 | Start | Dauer |
|---|---|---|---|---|---|---|---|---|---|
| Vorlage |  |  | Basislatex | 1,2 | 1,2 | 1,2 | 1,2 |  |  |
|  |  |  | Wasser | 40 | 40 | 40 | 40 |  |  |
|  |  |  | Trilon B | 0,01 | 0,01 | 0,01 | 0,01 |  |  |
|  |  |  | Emulgator 5 | 0,05 | 0,05 | 0,05 | 0,05 |  |  |
|  |  |  | APS | 0,1 | 0,1 | 0,1 | 0,1 |  |  |
| Zuläufe | 1) | Styrol |  | 61,8 | 61,8 | 61,8 | 61,8 |  |  |
|  |  | Butadien |  | 33 | 33 | 33 | 33 |  |  |
|  |  | Acrylsäure |  | 4,0 | 4,0 | 4,0 | 4,0 | 0 | 7 |
|  | 2) | Emulgator 5 |  | 0,2 | 0,4 | 0,6 | 0,85 |  |  |
|  |  | Wasser |  | 48,6 | 48,6 | 48,6 | 48,6 | 1h15' | 6,75 |
|  | 3) | NaOH |  | 0,33 | 0,33 | 0,33 | 0,33 |  |  |
|  |  | NG(%) |  | 15% | 15% | 15% | 15% |  |  |
|  |  | APS |  | 1,2 | 1,2 | 1,2 | 1,2 |  |  |
|  |  | Wasser |  | 7,1 | 7,1 | 7,1 | 7,1 | 0 | 8 |
|  | 4) | DDM |  | 1,1 | 1,1 | 1,1 | 1,1 | 0 | 7 |
|  | 5) | Emulgator 5 |  | 0,3 | 0,3 | 0,3 | 0,3 |  |  |
|  |  | Wasser |  | 4,3 | 4,3 | 4,3 | 4,3 | 15min | 1 |

| Eigenschaften | Versuch-Nr. | 24 | 25 | 26 | 27 |
|---|---|---|---|---|---|
|  | Kesselbelegung | frei | frei | frei | frei |

(fortgesetzt)

| Eigenschaften | Versuch-Nr. | 24 | 25 | 26 | 27 |
|---|---|---|---|---|---|
| | Koagulat | 0,14 | 0,19 | 0,14 | 0,11 |
| | spez.Trübung | 0,86 | 0,862 | 0,85 | 0,816 |
| | Scherstab. | 44 | 52 | 61 | 65 |
| | Viskosität | 110 | 120 | 105 | 103 |
| | OFS | 44 | 44 | 41 | 39 |

**Vergleichsbeispiel 9**

| | Versuch-Nr. | | 28 | 29 | 30 | 31 | Start | Dauer |
|---|---|---|---|---|---|---|---|---|
| Vorlage | | Basislatex | 1,2 | 1,2 | 1.2 | 1,2 | | |
| | | Wasser | 33 | 33 | 33 | 33 | | |
| | | Trilon B | 0,01 | 0,01 | 0,01 | 0,01 | | |
| | | Emulgator 6 | 0,05 | 0,05 | 0,05 | 0,05 | | |
| | | APS | 0,1 | 0,1 | 0,1 | 0,1 | | |
| Zuläufe | 1) | Styrol | 61,8 | 61,8 | 61,8 | 61,8 | | |
| | | Butadien | 33 | 33 | 33 | 33 | | |
| | | Acrylsäure | 4,0 | 4,0 | 4,0 | 4,0 | 0 | 7 |
| | 2) | Emulgator 6 | 0,40 | 0,60 | 0,85 | 1,00 | | |
| | | Wasser | 48,6 | 48,6 | 48,6 | 48,6 | 1h15' | 6,75 |
| | 3) | NaOH | 0,33 | 0,33 | 0,33 | 0,33 | | |
| | | NG (%) | 15% | 15% | 15% | 15% | | |
| | | APS | 1,2 | 1,2 | 1,2 | 1,2 | | |
| | | Wasser | 7,1 | 7,1 | 7,1 | 7,1 | 0 | 8 |
| | 4) | DDM | 1,1 | 1,1 | 1,1 | 1,1 | 0 | 7 |
| | 5) | Emulgator 6 | 0,3 | 0,3 | 0,3 | 0,3 | | |
| | | Wasser | 11,3 | 11,3 | 11,3 | 11,3 | 15min | 1 |

| Eigenschaften | Versuch-Nr. | 28 | 29 | 30 | 31 |
|---|---|---|---|---|---|
| | Kesselbelegung | frei | frei | frei | frei |
| | Koagulat | 0,12 | 0,11 | 0,1 | 0,19 |
| | spez.Trübung | 0,832 | 0.827 | 0,815 | 0,831 |
| | Scherstab. | 57 | 56 | 57 | 66 |
| | Viskosität | 110 | 103 | 95 | 105 |
| | OFS | 45 | 44 | 42 | 42 |

**Vergleichsbeispiel 10**

| | | Versuch-Nr. | 32 | Start | Dauer |
|---|---|---|---|---|---|
| Vorlage | | Basislatex | 1,15 | | |
| | | Wasser | 35 | | |
| | | Trilon B | 0,01 | | |
| | | Emulgator 9 | 0,05 | | |
| | | APS | 0,1 | | |
| Zuläufe | 1) | Styrol | 61,85 | | |
| | | Butadien | 33 | | |
| | | Acrylsäure | 4,0 | 0 | 9 |
| | 2) | Emulgator 9 | 0,6 | | |
| | | Wasser | 48,6 | 1h15' | 7,75 |
| | 3) | NaOH | 0,225 | | |
| | | NG (%) | 10% | | |
| | | APS | 1,2 | | |
| | | Wasser | 7,1 | 0 | 9 |
| | 4) | DDM | 1,3 | 0 | 9 |
| | 5) | Emulgator 9 | 0,3 | | |
| | | Wasser | 9,3 | 15min | 1 |

| Eigenschaften | Versuch-Nr. | 32 |
|---|---|---|
| | Ca-Test | 24 |
| | Kesselbelegung | frei |
| | Koagulat | 0,16 |
| | spez.Trübung | 0,867 |
| | Scherstab. | 48 |
| | Viskosität | 113 |
| | OFS | 45 |

**Patentansprüche**

1.  Stabile, wässrige Dispersion von Copolymerisaten, erhältlich durch Emulsionspolymerisation von

    a) 20-80 Gew.-Teilen Butadien
    b) 20-80 Gew.-Teilen Styrol
    c) 0,1-10 Gew.-Teilen Acrylsäure
    d) 0-20 Gew.-Teilen ethylenisch ungesättigter Carbonsäurenitrile sowie
    e) 0 bis 20 Gew.-Teilen sich von Komponente b) unterscheidenden copolymerisierbarer Vinylverbindungen in
    Gegenwart von Wasser und 0,1 bis 5 Gew.-Teilen Emulgator, bezogen auf 100 Gew.-Teile der Komponente
    a) bis e) sowie in Gegenwart von wasserlöslichen Initiatoren, wobei als Emulgatoren
    **f)** Schwefelsäurehalbester ethoxylierter Fettsäurealkohole **mit einem Ethoxylierungsgrad von 8 bis 9**

eingesetzt werden, darüber hinaus **mehr als 50 Gew.-%** bis 85 Gew.-% der insgesamt eingesetzten Emulgatoren innerhalb der Zeit zugegeben werden, in der bis 40 % des Gesamtumsatzes der Einsatzkomponenten erreicht ist, wobei während der Emulsionspolymerisation durch Zusatz von Basen 1 bis 50 % der Komponente c) zugrundeliegenden Carbonsäuregruppen neutralisiert werden.

2. Stabile, wässrige Dispersion von Copolymerisaten nach Anspruch 1, wobei **mehr als 65 Gew.-%** der insgesamt eingesetzten Emulgatoren innerhalb der Zeit zugegeben werden, in der bis 40 % des Gesamtzusatzes der Einsatzkomponente erreicht ist, wobei während der Emulsionspolymerisation durch Zusatz von Basen 1 bis 50 % der Komponente c) zugrundeliegenden Carbonsäuregruppen neutralisiert werden.

3. Stabile, wässrige Dispersionen von Copolymerisaten nach Anspruch 1, **dadurch gekennzeichnet, dass** die Emulgatoren in Mengen von 0,2 bis 4,5 Gew. Teilen, bezogen auf 100 Gew.-Teile der Komponenten a) bis e), eingesetzt werden.

4. Stabile, wässrige Dispersionen von Copolymerisaten nach Anspruch 1, **dadurch gekennzeichnet, dass** die wasserlöslichen Initiatoren in Mengen von 0,1 bis 2 Gew.-%, bezogen auf die Gesamtmenge der zu polymerisierenden Monomeren, zugegeben werden.

5. Stabile, wässrige Dispersionen von Copolymerisaten nach Anspruch 1, **dadurch gekennzeichnet, dass** als wasserlösliche Initiatoren organische und/oder anorganische Peroxide und/oder Azoverbindungen eingesetzt werden.

6. Stabile, wässrige Dispersionen von Copolymerisaten nach Anspruch 1, **dadurch gekennzeichnet, dass** während der Emulsionspolymerisation durch Zusatz von Basen 5 bis 45 % der der Komponente c) zugrundeliegenden Carbonsäuregruppen neutralisiert werden.

**Claims**

1. A stable, aqueous dispersion of copolymers obtainable by emulsion polymerisation of

   a) 20-80 parts by weight of butadiene,
   b) 20-80 parts by weight of styrene,
   c) 0.1-10 parts by weight of acrylic acid,
   d) 0-20 parts by weight of ethylenically unsaturated carboxylic acid nitriles and
   e) 0-20 parts by weight of copolymerisable vinyl compounds differing from component b) in the presence of water and of 0.1 to 5 parts by weight of emulsifiers, relative to 100 parts by weight of components a) to e), and in the presence of water-soluble initiators, wherein the emulsifiers used are
   f) sulfuric acid semi-esters of ethoxylated fatty acid alcohols with a degree of ethoxylation of 8 to 9,

   moreover more than 50 wt.% to 85 wt.% of the total of the emulsifiers used are added within the time in which up to 40% of the overall conversion of the feed components is attained, wherein 1 to 50% of the carboxylic acid groups forming the basis of component c) are neutralised by the addition of bases during the emulsion polymerisation.

2. A stable, aqueous dispersion of copolymers according to claim 1, wherein more than 65 wt.% of the total of the emulsifiers used are added within the time in which up to 40% of the overall conversion of the feed components is attained, wherein 1 to 50% of the carboxylic acid groups forming the basis of component c) are neutralised by the addition of bases during the emulsion polymerisation.

3. Stable, aqueous dispersions of copolymers according to claim 1, **characterised in that** the emulsifiers are added in quantities of 0.2 to 4.5 parts by weight, relative to 100 parts by weight of components a) to e).

4. Stable, aqueous dispersions of copolymers according to claim 1, **characterised in that** the water-soluble initiators are added in quantities of 0.1 to 2 wt.%, relative to the total quantity of the monomers to be polymerised.

5. Stable, aqueous dispersions of copolymers according to claim 1, **characterised in that** organic and/or inorganic peroxides and/or azo compounds are used as water-soluble initiators.

6. Stable, aqueous dispersions of copolymers according to claim 1, **characterised in that** 5 to 45% of the carboxylic acid groups forming the basis of component c) are neutralised by the addition of bases during the emulsion polymerisation.

**Revendications**

1. Dispersion aqueuse stable de copolymères obtenue par polymérisation en émulsion de

   a) 20 à 80 parties en poids de butadéine,
   b) 20 à 80 parties en poids de styrène,
   c) 0,1 à 10 parties en poids d'acide acrylique,
   d) 0 à 20 parties en poids de nitriles d'acides carboxyliques à insaturation éthylénique et
   e) 0 à 20 parties en poids de composés vinyliques copolymérisables autres que celui du composant b), en présence d'eau et de 0,1 à 5 parties en poids d'agents émulsionnants, pour 100 parties en poids des composants a) à e), et en présence d'inducteurs solubles dans l'eau, les agents émulsionnants utilisés consistant en
   f) des hémi-esters sulfuriques d'alcools gras éthoxylés avec un taux d'éthoxylation de 8 à 9 esters,

   étant en outre spécifié que plus que 50% et jusqu'à 85% en poids des agents émulsionnants totaux mis en oeuvre sont ajoutés dans l'intervalle de temps dans lequel on atteint jusqu'à 40% du taux de conversion total des composants mis en oeuvre, et que, au cours de la polymérisation en émulsion, on neutralise par addition de bases de 1 à 50% des groupes acide carboxylique du composant c).

2. Dispersion aqueuse stable de copolymères selon la revendication 1, **caractérisée en ce que** plus de 65 % en poids des agents émulsionnants mis en oeuvre au total sont ajoutés au mélange de réaction dans l'intervalle de temps dans lequel on atteint jusqu'à 40 % du taux de conversion global des composants mis en oeuvre, étant spécifié que, au cours de la polymérisation en émulsion, 1 à 50% des groupes acide carboxyliques du composant c) sont neutralisés par addition de bases.

3. Dispersion aqueuse stable de copolymères selon la revendication 1, **caractérisée en ce que** les agents émulsionnants sont mis en oeuvre en quantité de 0,2 à 4,5 parties en poids pour 100 parties en poids des composants a) à e).

4. Dispersion aqueuse stable de copolymères selon la revendication 1, **caractérisée en ce que** les inducteurs solubles dans l'eau sont ajoutés en quantité de 0,1 à 2 % du poids total des monomères soumis à polymérisation.

5. Dispersion aqueuse stable de copolymères selon la revendication 1, **caractérisée en ce que** les inducteurs solubles dans l'eau que l'on utilise sont des peroxydes organiques et/ou minéraux et/ou des dérivés azoïques.

6. Dispersion aqueuse stable de copolymères selon la revendication 1, **caractérisée en ce que**, durant la polymérisation en émulsion, on neutralise par addition de bases de 5 à 45 % des groupes acide carboxylique du composant c).